# EUROPEAN PATENT APPLICATION

(11) **EP 2 746 577 A1**
(43) Date of publication of application: **25.06.2014**
(21) Application number: 12199097.2
(22) Date of filing: 21.12.2012
(51) Int. Cl.: F03D 11/00, F03D 11/04, F03D 1/00

(54) **Wind generator, section of a supporting structure of a wind generator and method of assembling a section**

(71) Applicant: Areva Wind GmbH, 27572 Bremerhaven (DE)
(72) Inventor: Kramer, Thomas, 26919 Brake (DE)
(74) Representative: Prinz & Partner

(57) **Abstract**

A section (12) of a supporting structure (4) of a wind generator (2), a wind generator (2) and a method of assembling a section (12) of a supporting structure of a wind generator (2) are provided. The supporting structure (4) of the wind generator (2) comprises a plurality of sections (12). Modules of a sub-system (40,42,45,46,54) of a wind generator are arranged on platforms (24,26,28) of a multi-stage platform packet (20). The platform packet (20) is arranged in an interior space of the section (12) and the platform packet (20) is mounted on the section.

## Description

### FIELD OF THE INVENTION

The invention relates to a section of a supporting structure of a wind generator, wherein the supporting structure comprises a plurality of sections and is configured for carrying a nacelle. The invention further relates to a wind generator and to a method of assembling a section of a supporting structure of a wind generator.

### BACKGROUND

Modules of a power block of a wind generator (also referred to as a wind driven power plant or a wind power plant) are often mounted inside a supporting structure of the wind generator. The supporting structure is typically based on a foundation and carries a nacelle at the top. It may be a tower or any other suitable construction. Modules of a power block of a wind generator may be for example: a transformer, switching cabinets, an inverter, a medium voltage system, a low voltage distribution system, etc.

WO 2010/103114 A1 discloses a tower segment having a plurality of floors in an interior space, wherein the floors carry the main components of the power block. However, every floor is directly and separately mounted on the wall or cladding of the tower. The tower segment has to be constructed very accurately so as to ensure a precise alignment between the individual floors and the fittings at the inner side of the tower wall. Assembly of the tower section is time consuming because every single floor must be lifted, aligned and fixed inside the tower segment separately.

### SUMMARY

It is an object of the invention to provide a section of a supporting structure of a wind generator, a method of assembling this section and a wind generator, wherein the assembly of the section and a sub-system of the wind generator is simplified.

In one aspect of the invention, a section of a supporting structure of a wind generator is provided. Within the context of this specification, a supporting structure of a wind generator is a supporting structure for carrying a nacelle of the wind generator. For example, the supporting structure may be a tower and the section is a tower segment or section. The supporting structure may comprise a plurality of sections, for example tower segments or sections. Modules of a sub-system of the wind generator may be arranged on a platform of a modular platform packet. The platform packet may be arranged in an interior space of the section. The platform packet may be mounted on the section.

In particular, the sub-system of the wind generator may comprise a power block and an air conditioning unit. Furthermore, the platform packet may be a modular multi-stage platform packet comprising a plurality of interconnected platforms.

Within the context of this specification, a power block may comprise the main power production components of the wind generator. For example, the power block comprises: a main transformer, a switching unit, a converter, power distribution panels, a main control cabinet, a medium voltage system, a low voltage distribution system and the like.

The multi-stage platform packet may be arranged in an interior space of the section of the supporting structure of the wind generator. In particular, the platform packet may be completely arranged inside the section, which means that the section completely surrounds the platform packet. The platform packet may be mounted on the section of the supporting structure. For example, the platform packet may be mounted on a wall or cladding of a tower segment. To be more precise, the platform packet may be mounted on an inner surface of a wall of a tower segment.

According to the prior art, separate platforms or floors are installed inside the tower section and every single floor must be lifted separately using a crane. An inner wall of a tower section is typically provided with a high number of threaded bushings. The floors are installed inside the tower section by help of a plurality of screwed connections. The tower section and the floors must be manufactured very precisely to ensure the accuracy of fit between the two parts. This leads to high manufacturing costs of the tower section and the floors. Furthermore, the assembly of the section is a time consuming process.

Advantageously, according to aspects of the invention, the section of the supporting structure can be outfitted or supplied with the modules of the sub-system before the platform packet is inserted in the tower section. Installation work may be performed faster and easier, when compared to the prior art. The multi-stage platform packet may be inserted into the interior space of the section as a single unit and within a single manufacturing step. The number of necessary joints between the section and the platform packet may be reduced. A structural integrity of the multi stage platform packet may be sufficiently high to allow a connection between a single platform of the platform packet and the section. It is no longer necessary to connect every single floor with the section. Furthermore, the section surrounding the platform packet protects the modules of the power block and the air conditioning unit during transport. This may be advantageous if the section is used for a supporting structure of an offshore wind generator. The harsh offshore conditions are likely to damage the modules of the sub-system if they are not accurately protected. The section will furthermore protect the modules of the sub-system against impacts, which may occur during the handling of the section.

According to an advantageous embodiment of the invention, each platform of the platform packet comprises a platform supporting structure. The platforms may be vertically stacked above each other. They may be coupled to each other via a respective one of the platform supporting structures. The platform packet may be mounted on the section via at least one of the platform supporting structures. In particular, the platform packet may be coupled to the section via a platform supporting structure of a single platform only. A platform supporting structure of a lowest platform of the platform packet may be configured to carry a load of the platforms, which are arranged above. The platform packet may be coupled to the section via the supporting structure of this lowest platform.

Alternatively, the platform packet may be arranged to be supported or suspended by the highest platform of the platform packet. The supporting structure of the platform packet may be arranged in such a way that the platform packet projects through the supporting structure and the upper or highest platform has a greater diameter when compared to the lower platforms. The lower platforms of the packet may be suspended on the upper platform and may be fastened thereto. The platform packet may be coupled to the section via the highest platform, in particular via the supporting structure of this highest platform

According to an advantageous embodiment, the platform packet and the section may be coupled using a bayonet coupling. The supporting structure of one of the platforms and a corresponding mount on the section may have complementary forms. They may be configured to be rotated with respect to each other once the platform packet has been inserted. The platform packet may rest on complementary bayonet supporting protrusions.

Alternatively, one of the platforms between the highest and the lowest platform may be coupled to the section to support the platform packet. A part of the platform packet, which is arranged below this platform, may be suspended. The opposite part of the platform packet, which may be arranged above, may be supported.

Advantageously, the number of joints between the segment of the supporting structure and the platform packet may be significantly reduced. In contrast, according to the prior art, the floors are separately mounted in the tower section using a high number of connections. Furthermore, the platform packet comprises a separate supporting structure, which is different from the supporting structure of the wind generator. The structural integrity of the platform packet may be independent from the structural integrity of the supporting structure of the wind generator. This may be advantageous for handling of the platform packet.

According to another advantageous embodiment of the invention, the section comprises a supporting stage. This supporting stage may be mounted on a wall of the section. It may project into the interior space of the section. The supporting stage may be configured to carry the load of the platform packet. In other words, the supporting stage may be configured to have a load bearing capability which is sufficiently high to carry the entire load or weight of the platform packet including the modules of the sub-system. In particular, the supporting stage may be an annular supporting stage. It may be arranged to project around an inner circumference of the section, in particular in the vicinity of the wall of the section. The supporting stage may be a supporting console projecting from the tower wall. This console may be fixed on the wall of the section, for example by welding or screwing.

Advantageously, the supporting stage, in particular an annular supporting stage, facilitates the installation of the platform packet inside the section. The connections between the platform packet and the section are arranged in a single work plane. The connections, for example screwed connections or welded joints, may be produced faster and easier. Higher manufacturing tolerances may be accepted for both, the supporting stage and the platform packet. For example, the threaded bushings, which are frequently used for installation of separate floors according to the prior art, require a precise angular alignment between the floors and the section. According to the embodiment of the invention, the platform packet may be simply placed upon the supporting stage. Subsequently, the platform packet and the supporting stage may be coupled at arbitrary connection points. A precise angular alignment is not absolutely necessary. The positions of these connection points are not restricted to predetermined positions which may be for example defined by a position of a threaded bushing. The installation of the multi-stage platform packet inside the section may be performed easier and faster.

According to an advantageous embodiment of the invention, the power block comprises a first group and a second group of modules. The first group of modules may comprise at least a main transformer and a switching unit of the wind generator. The second group of modules may comprise at least a converter of the wind generator. The first group of modules may be mounted on a first platform and a second group of modules may be mounted on a second platform. The first platform and the second platform may be stacked to be arranged directly above each other.

A free end of the platform packet, i.e. either an upper end or a lower end, may be equipped with stabilizing struts. The stabilizing struts may be coupled to a highest or to a lowest platform of the platform packet, in particular to a supporting structure of these platforms. A free end of the stabilizing struts may rest against an inner wall of the section. An elastic member may be coupled to the free end of the stabilizing struts. For example, threaded spindles may cooperate with threaded parts, which may be fixed on the free end of the packet. For example, a threaded bushing or mount may be coupled to a platform of the platform packet. Advantageously, the stabilizing struts are adjustable via the spindles. They may be further provided with a rubber buffer which abuts against the tower wall. The struts may be adjusted in that the rubber buffer contacts the inner wall of the tower so as to stabilize the platform packet and to avoid vibrations. In particular, at least three stabilizing struts may be coupled to the platform packet. They may provide a static abutment between the free end of the platform packet and the tower.

According to another aspect of the invention, a wind generator having a supporting structure, which comprises a segment according to aspects of the invention, is provided. In particular, the wind generator may be an offshore wind generator. Same or similar advantages which have been mentioned with respect to the section according to aspects of the invention apply to the wind generator in a same or similar way and are not repeated.

According to still another advantageous aspect of the invention, a method of assembling a section of a supporting structure of a wind generator is provided. The supporting structure may comprise a plurality of sections and may be suitable for carrying a nacelle of the wind generator. Modules of a sub-system of the wind generator are mounted on a platform. A plurality of modules of the sub-system may be mounted on different platforms simultaneously. A plurality of platforms may be subsequently assembled to provide a modular multi-stage platform packet. Assembly of the platform packet may be performed by stacking and coupling the individual platforms. The platforms may be coupled permanently, for example using screwed or welded joints. The platform packet may be arranged in an interior space of a section of the supporting structure of the wind generator and may be mounted on the section.

According to an advantageous embodiment of the invention, at least a part of the modules of the sub-system, in particular of the power block, are wired prior to the arrangement of the platform packet in the interior space of the section. This is advantageous because the very limited space inside the section represents a significant constraint to effective installation work. If the wiring of at least a part of the modules of the sub-system, preferably the wiring of all modules of the sub-system, which are arranged on the platforms of the packet, is performed prior to insertion of the platform packet into the interior space of the section, the installation work may be performed faster and therefore more cost effective. Furthermore, the installation work may be carried out in a production hall which offers accurate working conditions. In contrast to off-shore works, supply with spare parts and any tool or component which may be necessary is not an issue when the work is carried out at a production side.

According to another advantageous embodiment of the invention, the modules of the sub-system are mounted on the platforms prior to assembly of the multi-stage platform packet. In particular, the modules of the power block are of significant weight and dimension. They may be arranged very conveniently using a heavy load crane. However, this requires access to the platforms from above. When the modules of the power block are arranged on the platforms prior to assembly of the platform packet, the platforms are accessible from above and the modules may be conveniently arranged on the platforms.

In an advantageous embodiment of the invention, wiring of the modules of the sub-system, in particular of the power block, is performed after assembly of the multi-stage platform packet. The wiring works may include the wiring of modules which are arranged on different platforms of the multi-stage platform packet. Installation work, which has to be carried out on different levels, may be very time consuming if there is not enough work space around the platform packet. According to the prior art, this is the case because the modules of the power block are arranged in a section prior to wiring. However, according to aspects of the invention, the wiring is performed prior to insertion of the platform packet into the section. The installation work may be carried out very effectively.

The installation of the platform packet inside the section may be carried out in two ways. The platform packet may be assembled outside the section. Subsequently, it is inserted into the section as a whole. According to the second option, the platforms are pre-assembled and prewired outside the tower. Subsequently, they are stacked one by one inside the section.

Same or similar advantages which have been already mentioned with respect to the section according to aspects of the invention apply to the method of assembling a wind generator in a same or similar way and are therefore not repeated.

### BRIEF DESCRIPTION OF DRAWINGS

Further aspects and characteristics of the invention ensue from the following description of preferred embodiments of the invention with reference to the accompanying drawings, wherein
FIG. 1 is a simplified view showing a wind generator according to an embodiment of the invention,
FIG. 2 is a simplified perspective view showing a section of a supporting structure of a wind generator, according to another embodiment of the invention and
FIG. 3 is a simplified side view showing a multi-stage platform packet.

### DETAILED DESCRIPTION OF EXAMPLE EMBODIMENTS

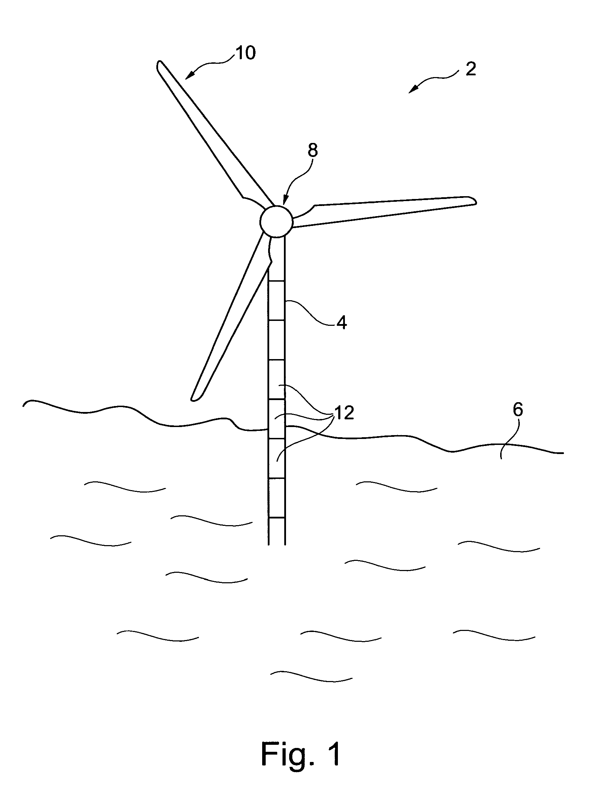

FIG. 1 is a simplified view showing a wind generator 2. By way of an example, the wind generator 2 is an offshore wind generator 2. A supporting structure 4 of the wind generator 2 is built on suitable underwater foundations in the sea 6 and carries a nacelle 8. A rotor hub, to which the rotor blades 10 are mounted, is fixed on the nacelle 8. For example, the supporting structure 4 may be a tower having a substantially circular cross section. The supporting structure 4 comprises a plurality of sections 12, which are assembled on top of each other. Due to simplification of the drawings, only some of the sections 12 are given reference numerals.

A sub-system of the wind generator 2, which may comprise a power block and an air conditioning unit may be arranged in one of the sections 12 of the supporting structure 4. The power block may comprise the main power production components of the wind generator 2, in particular the main transformer, a switching unit and a converter. Further modules of the power block may be: switching cabinets, a medium voltage system, a low voltage distribution system. The modules of the sub-system, in particular the modules of the power block may be arranged in one of the lower tower sections 12.

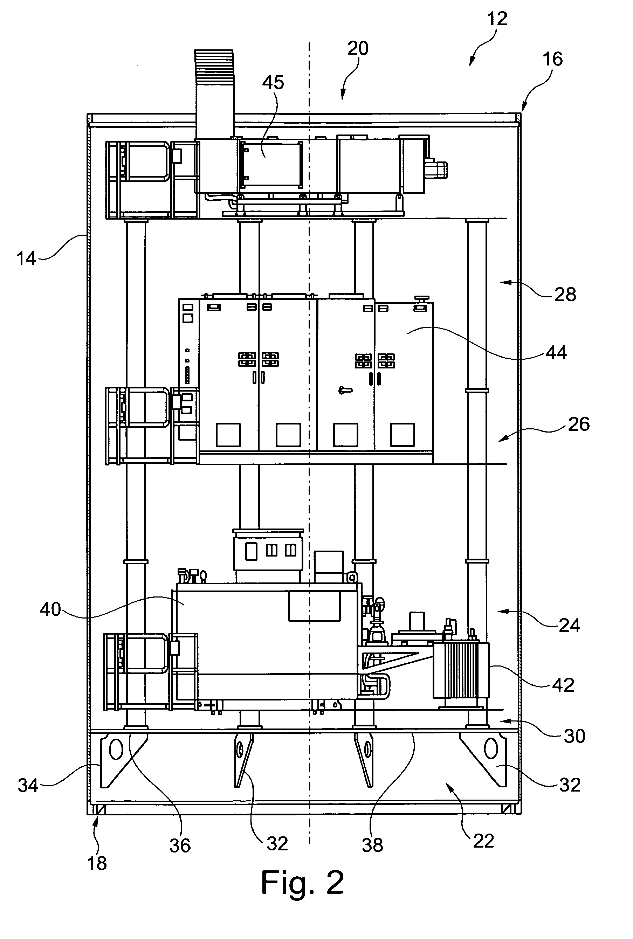

FIG. 2 is a simplified perspective view showing a section 12, according to an embodiment of the invention. The section 12 comprises modules of the sub-system of the wind generator 2. By way of an example only, the section 12 is a tower section having a substantially cylindrical shape. In FIG. 2, the wall 14 of the section 12 is virtually cut out at one lateral side thereof to show the interior of the section 12. The section 12 may comprise an upper assembly flange 16 and a lower assembly flange 18. The section 12 may be coupled to an adjacent higher section 12 of the supporting structure 4 at the upper assembly flange 16. Similarly, the section 12 may be coupled to a lower section 12 of the supporting structure 4, which may be arranged underneath, via the lower assembly flange 18.

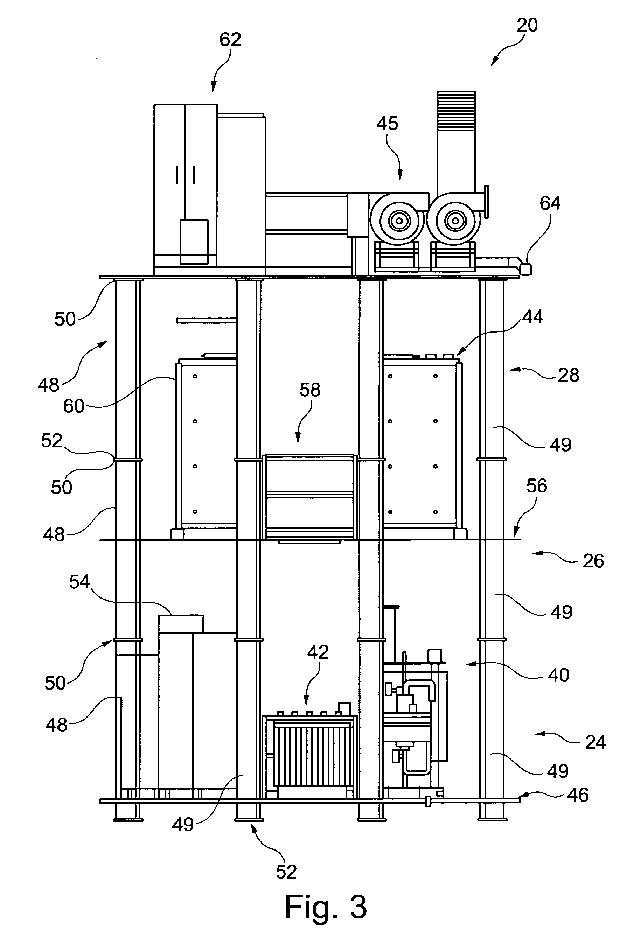

A multi-stage platform packet 20 may be arranged in an interior space 22 of the section 12. The platform packet 20 comprises a plurality of interconnected platforms 24, 26, 28. The platform packet 20 will be explained in more detail with reference to FIG. 3.

The platform packet 20 is mounted on the section 12 of the supporting structure 4 of the wind generator 2. According to the embodiment of FIG. 2, the platform packet 20 is mounted on a supporting stage 30, which may be an annular member. The supporting stage 30 may be mounted on the wall 14 of the section 12. For example, a number of supporting plates 32 may be applied for carrying the supporting stage 30. The supporting plates 32 may be mounted on an inner surface of the wall 14 of the section 12 at a first edge 34. For example, the supporting plates 32 may be welded to the inner surface of the wall 14 of the section 12. A second edge 36 of the supporting plates 32 carries a substantially annular ring 38 and may be fixed thereto. For example, the annular ring 38 may be welded to the second edges 36 of the supporting plates 32. The supporting stage 30, in particular the annular ring 38, projects into the interior space 22 of the section 12. The supporting stage 30, in particular the annular ring 38, may substantially project along an inner circumference or perimeter of the section 12. A load bearing capability of the supporting stage 30 may be sufficiently high to carry the entire load or weight of the platform packet 20 including the modules of the sub-system, which are arranged on the platforms 24, 26, 28.

The platform packet 20 may be mounted in the interior space 22 of the section 12 by placing a lowest or first platform 24 on the supporting stage 30. Advantageously, connections between the platform packet 20 and the section 12, for example screwed connections or welded joints, are arranged in a single level, namely that of the annular ring 38. This facilitates the installation of the platform packet 20 inside the interior space 22 of the section 12.

Furthermore, the platform packet 20 may be mounted on the section 12 via the highest or third platform 28. The platform packet 20 may suspend from the third platform 28. The highest platform 28 may have a greater diameter when compared to the lower platforms 24, 26.

According to another advantageous embodiment, the platform packet 20 and the section 12 may be coupled using a bayonet coupling. The supporting structure 48 of one of the platforms 24, 26, 28 and a corresponding mount on the section 12 may have complementary forms. They may be configured to be rotated with respect to each other once the platform packet 20 has been inserted. The platform packet 20 may rest on complementary bayonet supporting protrusions.

Furthermore, the upper platform 28 may be equipped with stabilizing struts (not shown). The stabilizing struts may be coupled to the supporting structure 48 of the highest platform 28 of the platform packet 20, when the packet is supported by the lowest platform 24. A free end of the stabilizing struts may rest against the wall 14 of the section 12. An elastic member may be coupled to the free end of the stabilizing struts, for example a rubber buffer. Threaded spindles of the struts may cooperate with threaded bushings on the highest platform 28. For example, a threaded bushing or mount may be coupled to the supporting structure 48 of the platform 28. Advantageously, the stabilizing struts are adjustable via the spindles. They may provide a static abutment between the platform packet 20 and the tower wall 14 so as to avoid an oscillation of the platform packet 20.

The platform packet 20 according to the embodiment of FIG. 2, carries modules of the sub-system of the wind generator 2. The sub-system comprises a power block and an air conditioning unit. The platform packet 20 comprises a first platform 24, which carries a main transformer 40, a station supply transformer 42 and a switching unit (not visible). The first platform 24 may comprise modules of a medium voltage section of the power block. A load bearing capability of the first platform 24 may be higher than 24 t. A second platform 26 of the platform packet 20 may carry a converter (not visible) and further parts of the power block. For example, the second platform 26 may carry a switching or control cabinet 44. Furthermore, a filter of an air conditioning unit may be arranged on the second platform 26. The second platform 26 may have a load bearing capability which is higher than 13 t. The third platform 28 carries an air conditioning unit 45 and further switching cabinets (not shown). The third platform 28 may have a load bearing capability which is higher than 8 t.

The section 12 may be a steel tube. The platforms 24, 26, 28 may be also manufactured from steel. Similar, the supporting stage 30, including the annular ring 38 and the supporting plates 32, may be manufactured from steel. The section 12 may have a diameter of approximately 6 m. A total weight of the section 12 including the platform packet 20 may be approximately 170 t.

The modules of the power block may be divided into a first group of modules and a second group of modules. The first group of modules may comprise at least the main transformer 40 and the switching unit. The second group may comprise at least the converter. The first group of modules may be arranged on the first platform 24 and the second group of modules may be arranged on the second platform 26. The modules of the first group, in other words the main transformer 40 and the switching unit, may have a weight of approx. 12 tons and 4 tons, respectively. These are the heaviest modules of the power block and may be arranged at the lowest level of the platform packet. The first platform 24 may have a higher load bearing capability when compared to the other platforms 26, 28 of the platform packet 20. The converter, which is a module of the second group, is significantly lighter (approx. 5 t) when compared to the modules of the first group. The second platform 26 may have a lower load bearing capability than the first platform 24. The load bearing capability of the third platform 28 may be lower that that of the first and second platform 24, 26, which are arranged underneath.

FIG. 3 is a simplified side view of the platform packet 20. The first platform 24 comprises a first floor 46 and a platform supporting structure 48. By way of an example, the platform supporting structure 48 comprises a plurality of columns 49, which project substantially perpendicular from the floor 46. The columns 49 may comprise a head plate 50 and a foot plate 52. The supporting structures 48 of adjacent platforms 24, 26, 28 may be coupled using a screwed or welded connection between the respective foot plates 52 of the upper platform and the head plates 50 of the adjacent lower platform. The second and third platform 26, 28 may be configured similar to the first platform 24. They also comprise a floor 56, 64 and a supporting structure having a plurality of columns 49.

The assembly of the platform packet 20 may start with the first platform 24. The modules of the power block, i. e. the main transformer 40, the station supply transformer 42 and the switching unit 54, may be arranged on the first floor 46 of the first platform 24. Similarly, further modules of the power block of the wind generator 2 may be arranged on a second floor 56 of the second platform 26 and on a third floor 64 of the third platform 28. For example, the switching cabinet 44 and the converter 58 as well as a filter 60, which may be a part of the air conditioning unit 45, may be arranged on the second floor 56 of the second platform 26. An air conditioning unit 45 and further switching cabinets 62 may be arranged on the third floor 64 of the third platform 28. Advantageously, the modules of the sub-system may be arranged on a respective one of the platforms 24, 26, 28 simultaneously, which means at a same time and in parallel production steps.

Subsequent to the arrangement of the modules, the platform packet 20 may be assembled. This may be performed by vertically stacking the platforms 24, 26, 28 on top of each other. The platforms 24, 26, 28 may be permanently coupled, preferably via their head plates 50 and foot plates 52. For example, the platforms 24, 26, 28 may be welded or screwed together to form the platform packet 20.

The modules of the power block may be wired after assembly of the multi-stage platform packet 20. However, wiring of the modules is performed prior to insertion of the platform packet 20 into the section 12. The working space for electrical installation or wiring works inside the interior space 22 of the section 12 is very limited, which makes it a difficult task. However, if the wiring of the modules of the sub-system, in particular of the power block, is performed after assembly of the platforms 24, 26. 28 into the platform packet 20 but prior to insertion of the platform packet 20 into the section 12, the modules are accessible from all sides of the platform packet 20. The wiring works may be conducted very efficiently.

Although the invention has been described hereinabove with reference to specific embodiments, it is not limited to these embodiments and no doubt further alternatives will occur to the skilled person that lie within the scope of the invention as claimed.

## Claims

1. A section of a supporting structure of a wind generator, **characterized in that** modules of a sub-system of the wind generator are arranged on a platform of a modular platform packet, which comprises at least one platform, wherein the platform packet is arranged in an interior space of the section and the platform packet is mounted on the section.

2. The section according to claim 1, wherein the platform packet is a modular multi-stage platform packet comprising a plurality of interconnected platforms.

3. The section according to claim 2, wherein each platform of the platform packet comprises a platform supporting structure and the platforms are vertically stacked and coupled to each other via a respective one of the platform supporting structures and the platform packet is mounted on the section at a platform supporting structure of at least one of the platforms.

4. The section according to anyone of the preceding claims, further comprising a supporting stage, which is mounted on a wall of the section and projects into the interior space of the section, wherein the platform packet is coupled to the section via the supporting stage.

5. The section according to claims 3 and 4, wherein a platform supporting structure of a lowest platform of the platform packet is supported and mounted on the supporting stage.

6. The section according to anyone of the preceding claims, wherein the sub-system comprises a power block of the wind generator and an air conditioning unit.

7. The section according to claim 6, wherein the power block comprises a first group and a second group of modules, wherein the first group of modules comprises at least a main transformer and a switching unit and the second group comprises at least a converter, wherein the first group of modules is mounted on a first platform and the second group of modules is mounted on a second platform, and wherein the first platform and the second platform are arranged directly above each other.

8. A wind generator having a supporting structure for carrying a nacelle, wherein the supporting structure comprises a section according to anyone of the preceding claims.

9. The wind generator according to claim 8, wherein the wind generator is an off-shore wind generator.

10. A method of assembling a section of a supporting structure of a wind generator, wherein the supporting structure comprises a plurality of sections and is configured for carrying a nacelle, wherein the method is **characterized by** the steps of:
a) mounting modules of a sub-system of the wind generator on a platform,
b) assembling a plurality of platforms to provide a modular multi-stage platform packet,
c) arranging the platform packet in an interior space of the section of the supporting structure of the wind generator and
d) mounting the platform packet on the section.

11. The method according to claim 10, further comprising the step of wiring at least a part of the modules of the sub-system prior to arrangement of the platform packet in the interior space of the section.

12. The method according to claim 11, wherein the step of wiring is performed after assembly of the multi-stage platform packet.

13. The method according to claim 11 or 12, wherein the step of wiring includes wiring of modules which are arranged on different platforms of the multi-stage platform packet.

14. The method according to anyone of claims 10 to 13, wherein the modules are mounted on the platforms prior to assembly of the multi-stage platform packet.

15. The method according to anyone of claims 10 to 14, wherein the sub-system comprises a power block and an air conditioning unit, and wherein the power block comprises a first group and a second group of modules, the first group of modules comprises at least a main transformer and a switching unit and the second group comprises at least a converter, and wherein the first group of modules is mounted on a first platform and the second group of modules is mounted on a second platform, wherein the first platform and the second platform are stacked directly above each other during assembly of the multi-stage platform packet, wherein, the step of assembling the multi-stage platform packet particularly comprises the steps of vertically stacking a plurality of platforms and permanently coupling the platform to provide the multi-stage platform packet.
